# EUROPEAN PATENT SPECIFICATION

(11) **EP 0 443 517 B1**
(45) Date of publication and mention of the grant of the patent: **06.09.1995**
(21) Application number: 91102345.5
(22) Date of filing: 19.02.1991
(51) Int. Cl.: B23B 27/14, B23B 51/04

(54) **Throw-away tipped drill**
Bohrer mit Einwegschneideinsatz
Foret à embout jetable

(30) Priority: 20.02.1990 JP 40644/90; 20.02.1990 JP 40645/90
(43) Date of publication of application: 28.08.1991
(73) Proprietor: SUMITOMO ELECTRIC INDUSTRIES, LTD., Osaka-shi, Osaka 541 (JP)
(72) Inventor: Isobe, Kazutaka, c/o Itami Works of, Itami-shi, Hyogo (JP); Noguchi, Kazuo, c/o Itami Works of, Itami-shi, Hyogo (JP); Nomura, Toshio, c/o Itami Works of, Itami-shi, Hyogo (JP)
(74) Representative: Herrmann-Trentepohl, Werner, Dipl.-Ing.

(56) References cited:
- EP-A- 0 081 775
- EP-A- 0 118 806
- EP-A- 0 184 223
- EP-A- 0 257 439
- EP-A- 0 319 926
- EP-A- 0 322 214
- EP-A- 0 356 097
- EP-A- 0 369 852
- DE-C- 262 345
- US-A- 3 540 323
- US-A- 4 714 385

## Description

### Field of the Invention

The present invention relates to the structure of a drill which is mainly adapted to drilling of steel, cast iron or super alloy, and more particularly, it relates to the structure of a high-quality throw-away tipped drill, which is excellent in wear resistance and toughness.

### Description of the Background Art

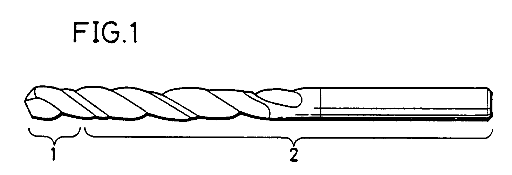

A drill is one of cutting tools for drilling steel products and the like. Fig. 1 shows an exemplary structure of a twist drill. The twist drill is formed by a cutting portion 1 which is applied to drilling, and a shank 2 which is not concerned in cutting but mainly adapted to discharge chips and is mounted on a chuck etc. of a cutting machine such as a drilling machine.

Another drilling tool with an interchangeable cutting insert, which is considered to represent the most relevant prior art, is known from the European Patent application EP-A-0 118 806 disclosing a drilling tool comprising a shaft with at least one flute and an interchangeable cutting insert. The insert consists of one or two flat tips, each having a main cutting edge. At the narrow side of the tip opposite to the bit there is a fastening spigot having two lateral bearing surfaces and being coaxial to the axis of the drill.

In the herein disclosed drill the insert is fixed to the shank only by utilizing the thrust force, i.e. the force acting in the direction of the rotation axis of the drill as a reaction force against the feeding movement of the drill and the torque. In this kind of cutting tool, the insert is locked with the shank by rotating it in a certain locking position in engagement with recesses provided at the shank. Using this drilling tool, it is possible to change the insert depending on the cutting operation.

In general, materials for drills are prepared from high-speed steel and cemented carbide. The high-speed steel, which is excellent in toughness but inferior in wear resistance, is improper for high-speed cutting. On the other hand, cemented carbide, which is excellent in wear resistance and tool accuracy characteristics but brittle, may cause breakage when the same is applied to a machine tool having low rigidity, for example.

In order to improve such materials, there have been proposed a structure attained by coating a cutting portion of high-speed steel with hard TiN, a structure attained by brazing a cutting portion of cemented carbide, and the like.

In recent years, there have further been proposed a structure attained by brazing different cemented carbide materials (P30 and D30) for improving wear resistance and toughness as disclosed in Japanese Utility Model Laying-Open No. 58-143115 (1983) or metallurgically integrating/connecting such different materials as disclosed in Japanese Utility Model Publication No. 62-46489 (1987), a drill of a double structure whose central and outer peripheral portions are made of different cemented carbide materials in consideration of difference between characteristics required for such portions as disclosed in Japanese Patent Laying-Open No. 62-218010 (1987), or a method of attaining such a double structure by injection molding as disclosed in Japanese Patent Laying-Open No. 63-38501 or 38502 (1988), and the like. There has also been proposed a structure attained by preparing a material for a drill from cermet Ti-base cemented carbide in order to improve adhesion resistance, as disclosed in Japanese Patent Laying-Open No. 62-292307 (1987).

A cutting portion and a shank of a drill are used under different loaded conditions. Therefore, different characteristics are required for the respective parts of such a drill. For example, wear resistance and adhesion resistance are required for a tip of the cutting portion, while toughness for maintaining strength of the tool is required for the shank. As to the tip of the cutting portion, further, different characteristics are required for central and outer peripheral portions thereof, since these portions are driven at different cutting speeds.

When a drill whose cutting portion is coated in order to satisfy such complicated requirements for the characteristics is resharpened for general use, the coating layer is inevitably separated at least from a front flank side, and hence most of the coating effect is lost.

On the other hand, a drill which is formed by brazing cemented carbide to its cutting portion is not applicable to deep hole drilling of an uncuttable material. If the shank is made of steel, further, significant difference is caused in thermal expansion coefficient between the same and the cemented carbide forming the cutting portion, to easily cause splitting or cracking in brazing.

In recent years, a cemented carbide material for the shank of a drill has been brought into a coarse grain or high binder phase state, in order to improve toughness of the shank. In this case, however, strength of the material is reduced or distortion of an elastic limit is reduced, and hence the shank is undesirably broken during perforating, due to vibration of a workpiece, instable rotation of a cutting machine, or the like.

While a drill formed by inseparably and integrally connecting the aforementioned cutting portion and shank can be continuously used by resharpening the cutting portion every prescribed operating time, the frequency of such resharpening is restricted, and the cost is increased. Further, sharpness and the tool life are dispersed depending on conditions of the resharpening operation. In addition, it is necessary to successively correctly comprehend the length of the drill in response to numerical control and automation of a cutting machine to which the drill is applied. Thus, the length of the drill must be measured through complicated operation every time the same is resharpened.

### SUMMARY OF THE INVENTION

In order to solve the aforementioned problems, an object of the present invention is to provide a throw-away tipped drill comprising an insert which is excellent in wear resistance as well as adhesion resistance and a shank which has sufficient toughness against breakage, with no resharpening for continuous use. The aforementioned objects are attained by means of a drill having the features of claim 1 or claim 5.

Such a throw-away tipped drill comprises an insert for cutting a workpiece and a shank to be mounted on a prescribed position of a cutting machine, and the insert is disengageably mechanically connected with the shank. At least a cutting edge of the insert is formed of a diamond sintered body, and the shank is made of steel.

The diamond sintered body forming the insert preferably contains diamond in a range of at least 70 volume percent and not more than 99 volume percent.

The insert may not entirely be formed of a diamond sintered body, but the material therefor may be prepared by bonding a diamond sintered body onto a base of cemented carbide. Alternatively, only the cutting edge of the insert may be formed of a diamond sintered body or a material prepared by bonding a diamond sintered body onto a base of cemented carbide, and connected with the remaining portion of the insert, which is made of cemented carbide, by brazing. In other words, at least the cutting edge of the insert may be formed of a diamond sintered body.

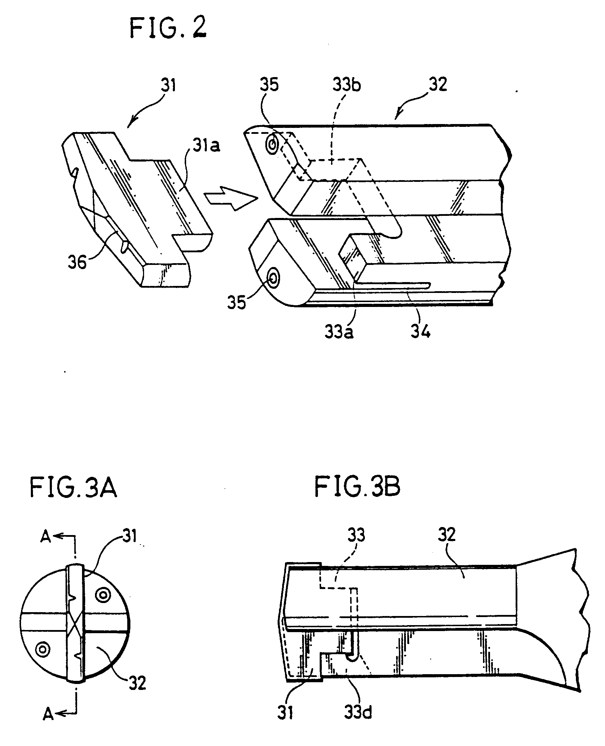

An insert and a shank of the throw-away tipped drill embodying the invention are connected with each other in the system shown in Figs. 2, 3A and 3B.

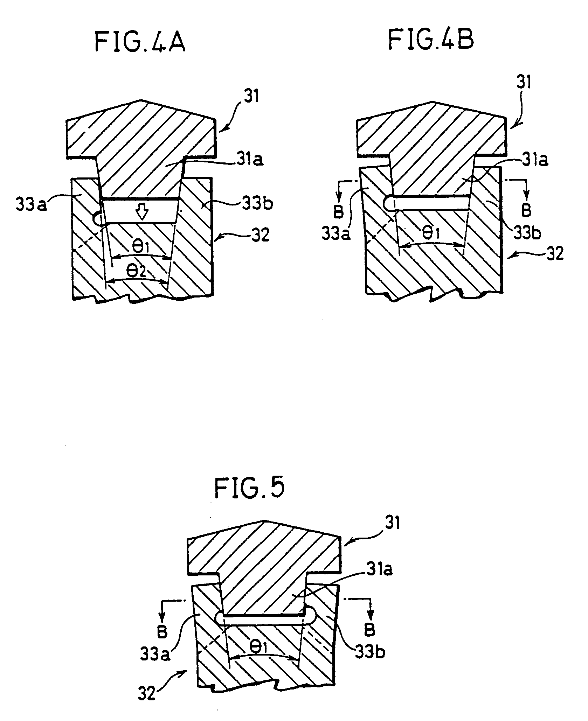

In a drill shown in Figs. 2, 3A and 3B, an insert 31 is fitted in a shank 32 along an arrow as shown in Fig. 2, so that the insert 31 and the shank 32 are connected with each other with no screw or the like, in the so-called self-grip system. In the state shown in Figs. 3A and 3B, the insert 31 and the shank 32 are connected with each other by this connection system. In such a connection state, side portions of a held portion 31a of the insert 31 are brought into contact with inner end surfaces of holding portions 33a and 33b of the shank 32 to cause frictional force, whereby the insert 31 is fixed to the shank 32. With reference to Figs. 4A and 4B, the state of such connection of the insert 31 and the shank 32 caused by engagement therebetween is explained as follows:
Before the insert 31 is engaged with the shank 32, an angle ϑ₁ formed by the left and right side portions of the held portion 31a is slightly greater than an angle ϑ₂ formed by the opposite inner end surfaces of the holding portions 33a and 33b. When the insert 31 is press-fitted in the shank 32, the angle ϑ₂ is gradually expanded by wedge action due to tapering of the left and right side portions of the held portion 31a and a slit 34 provided on the holding portion 33a. When ϑ₁ > ϑ₂, the held portion 31a is in contact with the holding portion 33b only at an upper end of the inner end surface of the holding portion 33a. When ϑ₂ reaches ϑ₁, the contact areas between both side portions of the held portion 31a and the inner end surface of the holding portion 33a are maximized as shown in Fig. 4B. The press fitting operation is stopped in this state, and the holding portion 33a is elastically deformed to cause pressing force in the contact surfaces of the same and the held portion 31a, so that the insert 31 is connected with/fixed to the shank 32 by frictional force between the contact surfaces.

A coolant supply hole 35 directly supplies a coolant to the cutting edge of the insert 31. Further, a chip breaker 36 is provided on the cutting edge of the insert 31, in order to part chips.

Fig. 5 shows another example of a shank 32, which is provided with slits 34 not only in a holding portion 33a but in another holding portion 33b. In this case, an insert 31 is press-fitted in the shank 32 so that both holding portions 33a and 33b are simultaneously expanded, thereby holding a held portion 31a by elastic force thereof.

Characteristics required for a drill are roughly classified into wear and adhesion resistance for an insert, and breakage resistance, which is represented by toughness, of a shank. At least the cutting edge of the insert may be formed of a diamond sintered body, whereby the insert is improved in wear resistance, adhesion resistance and toughness. This is because diamond is extremely hard and excellent in high thermal conductivity as compared with WC and Al₂O₃, which are generally employed as main components for tool materials, and a diamond sintered body is also excellent in toughness. Thus, the drill is suitable for cutting materials such as cemented carbide, an Al alloy containing a large amount of Si, ceramics, a copper alloy, carbon, and the like.

The diamond sintered body forming the insert preferably contains diamond in a range of at least 70 volume percent and not more than 99 volume percent since it is impossible to sufficiently improve wear resistance if the content is less than 70 volume percent, while the degree of sintering is deteriorated if the content exceeds 99 volume percent.

The shank, which is made of steel, is excellent in toughness and breakage resistance. Further, the material cost can be reduced.

In the drill, further, the insert and the shank are disengageably mechanically connected with each other, whereby it is possible to easily disengage and throw away the insert, which is relatively damageable and short-lived.

The throw-away tipped drill comprises an insert for cutting a workpiece and a shank to be mounted on a prescribed position of a cutting machine, and the insert is disengageably mechanically connected with the shank. At least the cutting edge of the insert is formed of a cubic boron nitride sintered body, and the shank is made of steel.

The cubic boron nitride sintered body forming the insert preferably contains cubic boron nitride in a range of at least 40 volume percent and not more than 80 volume percent.

The insert may not entirely be formed of a cubic boron nitride sintered body, but the material therefor may be prepared by bonding a cubic boron nitride sintered body onto a base of cemented carbide. Alternatively, only the cutting edge of the insert may be formed of a cubic boron nitride sintered body or a material obtained by bonding a diamond sintered body onto a base of cemented carbide, and connected with the remaining portion of the insert, which is made of cemented carbide, by brazing. In other words, at least the cutting edge of the insert may be formed of a cubic boron nitride sintered body.

The insert and the shank of this throw-away tipped drill can be connected with each other in the system shown in Figs. 2, 3A and 3B, similarly to the above.

At least the cutting edge of the insert may be formed of a cubic boron nitride sintered body, whereby the insert is improved in wear resistance, adhesion resistance and toughness. This is because cubic boron nitride is extremely hard and excellent in thermal conductivity as compared with WC and Al₂O₃, which are generally employed as main components for tool materials, and a cubic boron nitride sintered body is also excellent in toughness. Further, such a cubic boron nitride sintered body is also applicable to working of ferrous materials, particularly very hard steel such as hardened steel, since the same contains no carbon, dissimilarly to diamond. In addition, the cubic boron nitride sintered body is also capable of cutting an Ni-group or Co-group heat resistant alloy, which is regarded as an uncuttable material, and a ferrous sintered component.

The cubic boron nitride sintered body which is employed as a material for the insert preferably contains cubic boron nitride in a range of at least 40 volume percent and not more than 80 volume percent since it is impossible to sufficiently improve wear resistance if the content is less than 40 volume percent, while continuity between particles of cubic boron nitride is structurally deteriorated to reduce toughness if the content exceeds 80 volume percent.

As hereinabove described, a diamond or cubic boron nitride sintered body is employed as a material for at least the cutting edge of the insert and steel is employed as a material for the shank, whereby the insert is excellent in wear resistance, adhesion resistance and thermal cracking resistance (chipping resistance), while the shank is excellent in toughness and the cost can be relatively reduced. Thus, it is possible to provide a throw-away tipped drill having high reliability, long life and high quality, which causes no chipping of the insert and abrupt breakage of the shank, at a low cost.

Since the insert and the shank are disengageably mechanically connected with each other, the insert, which is relatively damageable and short-lived, can be easily disengaged from the shank to be thrown away. Thus, the insert may not be resharpened for continuous use, whereby the cost can be further reduced as compared with the conventional drill, whose insert is inseparably integrated with a shank. Since the drill requires no resharpening of the insert, dispersion of sharpness and tool life is reduced and the overall length of the drill can be maintained constant, with no requirement for measurement of the drill length. Further, a base material for the insert can be formed by injection molding, whereby it is possible to easily form a chip breaker or the like, to further reduce the working cost.

These and other objects, features, aspects and advantages of embodiments of the present invention will become more apparent from the following detailed description of embodiments of the present invention when taken in conjunction with the accompanying drawings.

### BRIEF DESCRIPTION OF THE DRAWINGS

Fig. 1 is a structural diagram showing a conventional twist drill;
Fig. 2 is an exploded perspective view showing a connection part of the so-called self-grip type drill among throw-away tipped drills embodying the present invention in an enlarged manner;
Fig. 3A is a front elevational view of the self-grip type throw-away tipped drill shown in Fig. 2, and Fig. 3B is a right side elevational view thereof;
Fig. 4A is a sectional view taken along the line A - A in Fig. 3A, for illustrating such a state that press fitting of an insert 31 in a shank 32 is started in the throw-away tipped drill Shown in Fig. 2, and Fig. 4B is a similar sectional view for illustrating such a state that the insert 31 is connected with/fixed to the shank 32;
Fig. 5 is a sectional view illustrating another example of a connection part of the throw-away tipped drill shown in Fig. 2, which is provided with slits 34 on both sides of holding portions 33a and 33b;
Fig. 6A is a perspective view showing an exemplary insert, whose cutting edge alone is formed of a diamond or cubic boron nitride sintered body, among throw-away tipped drills, and Figs. 6B and 6C are sectional views illustrating two examples of a portion around the cutting edge shown in Fig. 6A; and
Fig. 7 is a perspective view showing an exemplary insert, whose surface is entirely covered with a diamond film, among throw-away tipped drills.

### DESCRIPTION OF THE PREFERRED EMBODIMENTS

Embodiments of the present invention are now described.

A throw-away tipped drill according to a first embodiment of the present invention is formed by preparing an insert from a material obtained by bonding a diamond sintered body onto a base of cemented carbide and disengageably mechanically connecting the same with a shank of steel in the system shown in Fig. 2.

Table 1 shows composition values of various powder materials for diamond sintered bodies forming inserts of samples. Table 1 also shows steel materials for shanks of the samples. In the samples shown in Table 1, inserts and shanks are connected with each other in the system shown in Fig. 2. In the samples A to D, the sample D does not fall within the scope of the present invention because the content (volume percent), shown by marks **, of diamond is considerably below the defined range. As to the comparative sample E, the material for the insert is out of the scope of the present invention in the point that the cutting edge of its insert is formed of coated cemented carbide. In the comparative sample F, the material for the cutting edge of the insert is prepared from Si₃N₄, which is out of the scope of the present invention. Symbol * shows materials which are out of the scope of the present invention respectively.

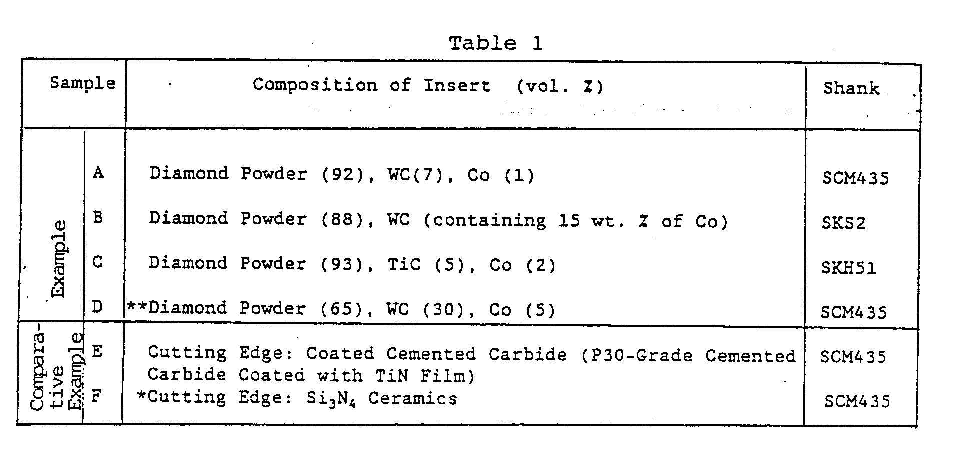

Performance evaluation tests for the aforementioned samples were made on drills of 8 mm in diameter, under the following conditions:
Workpiece: AC4C
Cutting Speed: 120 m/min., dry type (water-soluble cutting oil)
Feed Rate: 0.10 mm/rev.
Depth of Cut: 25 mm
Criterion: Tip conditions etc. were observed after working up to end of life.
Life: Generally regarded as ended when the outer peripheral flank was worn by at least 0.2 mm.

Table 2 shows the results of the aforementioned 15 performance evaluation tests. Excellent results were obtained in the samples A to C embodying the invention as compared with comparative samples E and F. As to the sample D, the number of working holes was reduced and depth of adhesive wear of the inner peripheral face was increased with respect to the same amount of outer peripheral front flank abrasion since the amount of diamond contained in the diamond sintered body forming the insert was less than the range of 70 to 99 volume percent.

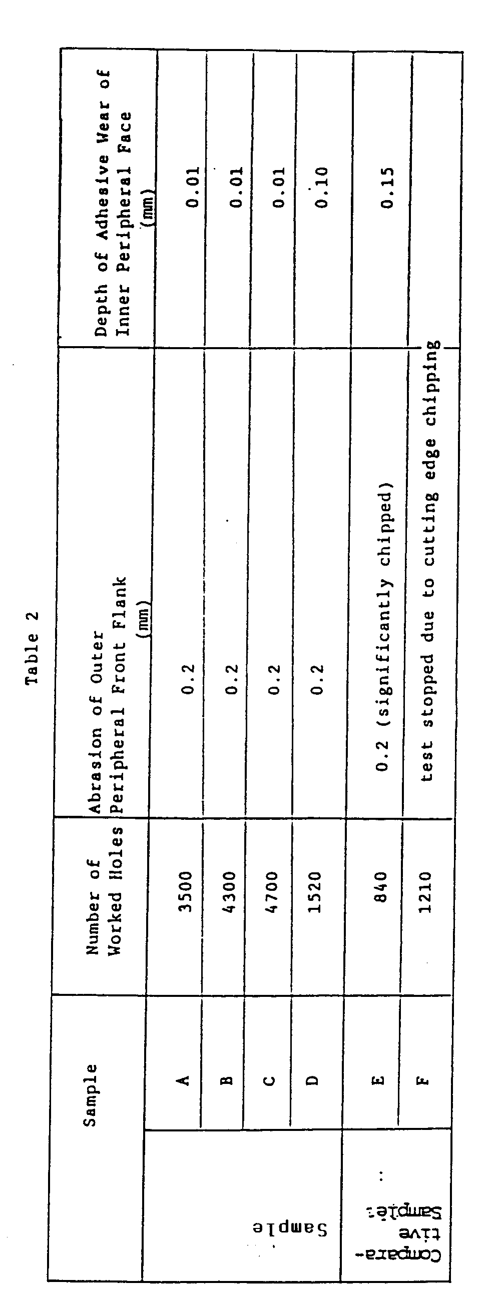

A second embodiment of the present invention is now described.

In this embodiment, samples of throw-away tipped drills were formed by inserts and shanks of the same materials as those for the sample A of first Example, to compare cutting characteristics as to types of connection systems f26
or the self-grip drill shown in Fig. 2 (sample G), and a comparative sample of a brazed drill, having an insert of cemented carbide, which was out of the scope of the present invention (sample J). Cutting conditions were as follows:
Workpiece: AC4C
Cutting Speed V: 50 m/min. and 150 m/min. (water-soluble cutting oil)
Feed Rate: 0.1 mm/rev.
Depth of Cut: 40 mm
Diameter of Worked Hole: 20 mm
Table 3 shows the results of the evaluated characteristics.

Cutting characteristics, represented by stability, can be regarded excellent as horizontal components, thrusts and torque values of cutting balance acting on the drills by cutting resistance are reduced and values of speed dependency are reduced.

From the results it is understood that the self-grip system of the sample G attained the most excellent cutting characteristics among the connection systems for the throw-away tipped drill.

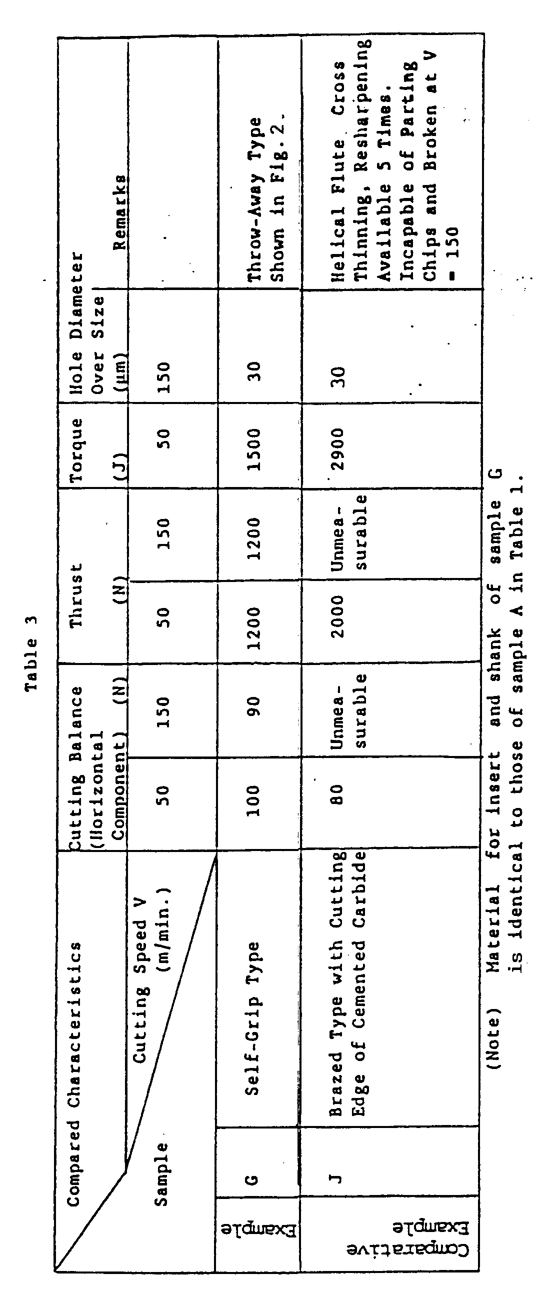

In the self-grip type throw-away tipped drill shown in Fig. 2, which was applied to the connection system for the sample G, the insert is fixed to the shank through elastic force of steel, which is easily caused by a slit defined in the shank. Thus, this drill requires no separate fastener means such as screw means. Therefore, it is possible to manufacture a first-diameter throw-away tipped drill having a diameter of not more than 10 mm, which has not been implemented in the conventional screw system due to inferiority in fastening strength, collapse of screws and the like. Further, workability is improved since no screwing is required in a step of connecting the insert and the shank in the working site but the drill can be assembled by simply press-fitting the insert into the shank.

Embodiment 3 of the present invention is now described.

A throw-away tipped drill according to third embodiment of the present invention is formed by preparing an insert from a material obtained by bonding a cubic boron nitride sintered body onto a base of cemented carbide and disengageably mechanically connecting the same with a shank of steel in the system shown in Fig. 2.

Table 4 shows composition values of various powder materials for cubic boron nitride sintered bodies forming inserts of samples. Table 4 also shows steel materials for shanks of the samples. In the samples shown in Table 4, inserts and shanks are connected with each other in the system shown in Fig. 2. In the samples K to O, the samples N and O do not fall within the scope of the present invention because the contents (volume percent), shown by marks **, of cubic boron nitride powder materials are out of the defined range of 40 to 80 volume percent. The comparative sample P is out of the inventive scope in the point that its shank is made of K30-grade cemented carbide, although its insert is formed of a cubic boron nitride sintered body.

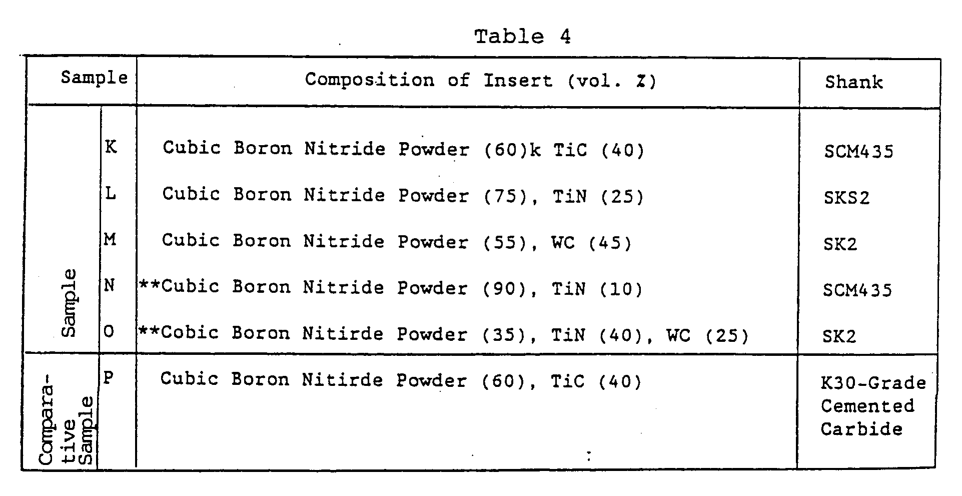

Performance evaluation tests for the aforementioned samples were made on drills of 12 mm in diameter, under the following conditions:
Workpiece: SNCM420 (H_{RC} = 50)
Cutting Speed: 100 m/min., dry type (water-soluble cutting oil)
Feed Rate: 0.15 mm/rev.
Depth of Cut: 20 mm
Criterion: Tip conditions etc. were observed after working up to end of life.
Life: Generally regarded as ended when the outer peripheral flank was worn by at least 0.2 mm.

Table 5 shows the results of the aforementioned 15 performance evaluation tests. Excellent results were obtained as to the samples K to M. The samples N and O are somewhat inferior in wear resistance and chipping resistance since the contents of cubic boron nitride in the cubic boron nitride sintered bodies forming the inserts are out of the defined range of 40 to 80 volume percent with respect to bonding phases of cemented carbide. For the purpose of reference, similar experiments were made as to four types of conventional drills as shown in the lower part of Table 5. It is understood from the results that the samples K to M are particularly superior in the samples.

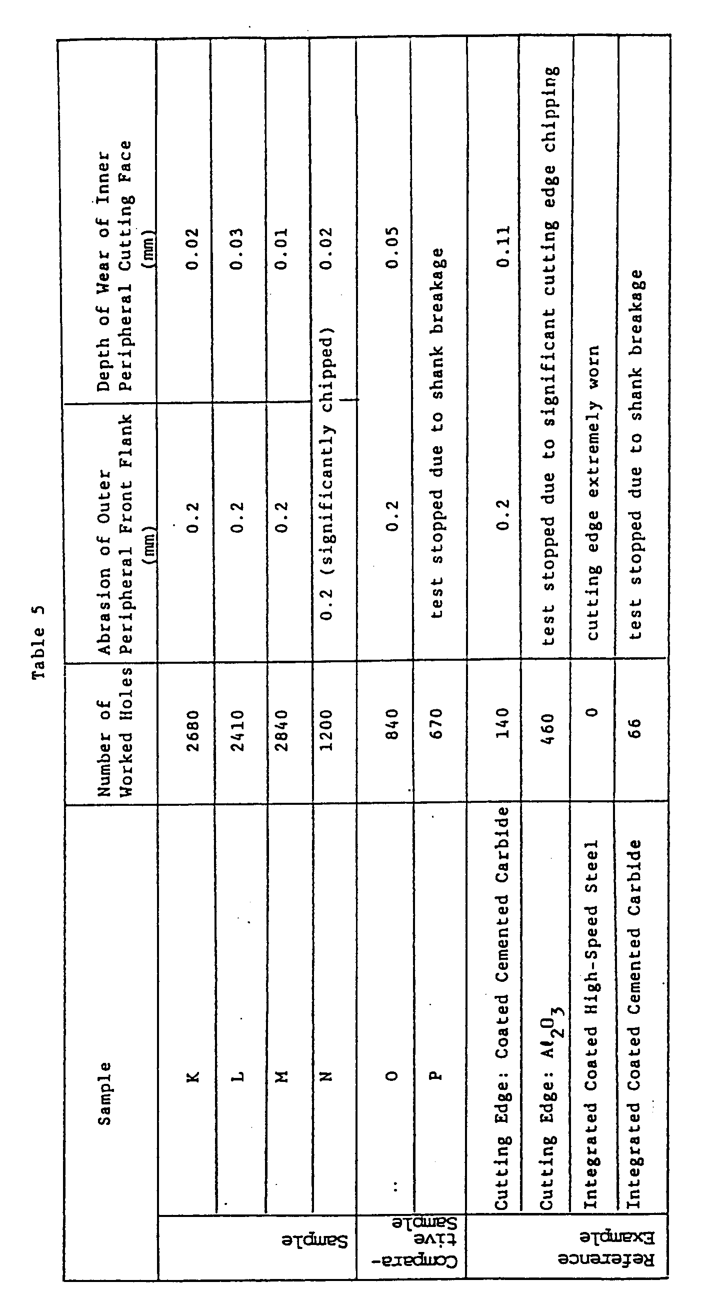

Fourth embodiment of the present invention is now described.

In this embodiment, samples of throw-away tipped drills were formed by inserts and shanks of the same materials as those for the sample K of third embodiment, to compare cutting characteristics as to the connection system for the self-grip drill shown in Fig. 2 (sample Q), and a comparative sample of a brazed drill, having an insert of cemented carbide, which was out of the scope of the present invention (sample T). Cutting conditions were as follows:
Workpiece: S50C, H_{B} = 220
Cutting Speed V: 50 m/min. and 150 m/min. (water-soluble cutting oil)
Feed Rate: 0.2 mm/rev.
Depth of Cut: 40 mm
Diameter of Worked Hole: 20 mm
Table 6 shows the results of the evaluated characteristics.

Cutting characteristics, represented by stability, can be regarded excellent as horizontal components, thrusts and torque values of cutting balance acting on the drills by cutting resistance are reduced and values of speed dependency are reduced.

From the results of the samples, it is understood that the self-grip system of the sample Q attained the most excellent cutting characteristics among the connection systems for the throw-away tipped drill.

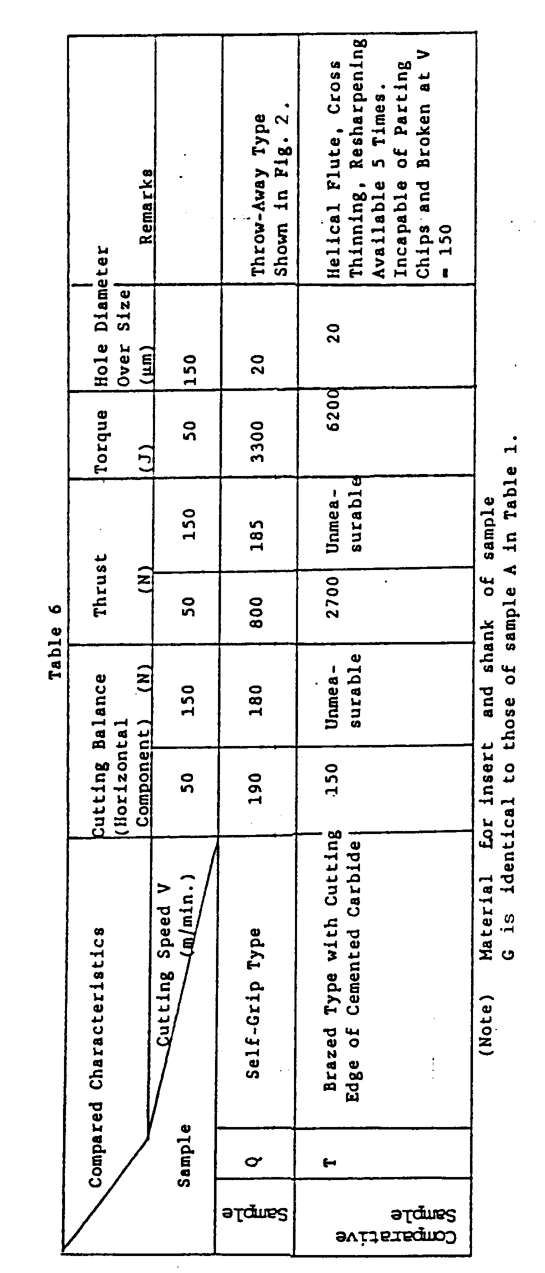

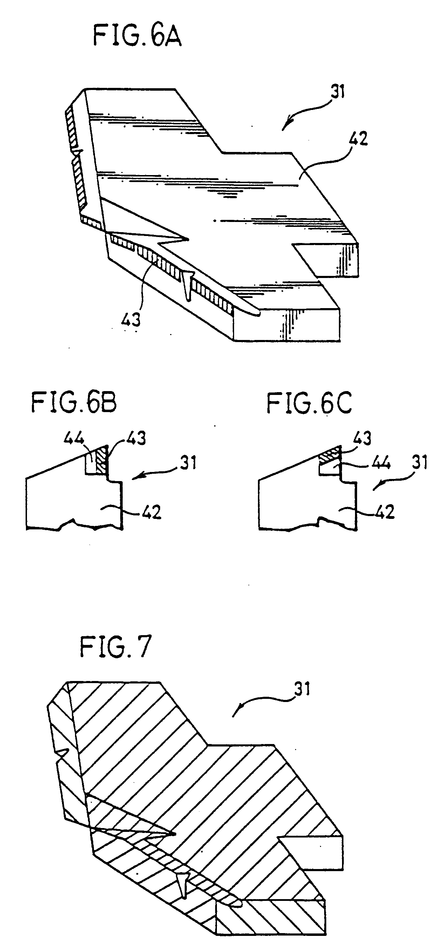

In first to fourth embodiments, at least the cutting edge of each insert is prepared from a diamond or cubic boron nitride sintered body, specifically as shown in Fig. 6A, for example, an insert tip 43 of a diamond or cubic boron nitride sintered body is attached to a cutting edge of a base 42, which is made of cemented carbide or steel, of an insert 31. In order to attain such a structure, a tip piece formed by connecting an insert tip 43 of a diamond or cubic boron nitride sintered body onto a base tip 44 of cemented carbide by burning is engaged with a groove provided in a cutting edge of a base 42 and brazed thereto, as shown in Figs. 6B and 6C.

By adopting aforementioned structure, it is possible to employ a hard diamond sintered body or cubic boron nitride sintered body as a material for only the cutting edge of the insert for which high wear resistance and hardness are required and to employ such a strong material as cemented carbide or steel as a material for the main body of the insert, and therefore, the life of the drill can be prolonged.

It is also possible to attain similar function/effect by preparing an insert 31 entirely from cemented carbide or ceramics and coating the overall surface thereof with a diamond film of less than 20 µm in thickness by vapor phase synthesis.

The method of manufacturing inserts wherein diamond coating is applied is more preferable, because they can be produced at a low cost by injection molding and complicated figures can be easily formed.

As a result of a performance evaluation test under the same cutting conditions as the first embodiment, after working 3200 holes, the abrasion of outer peripheral front frank was 0.2mm with a slight chipping and the depth of wear of inner peripheral cutting face was less than 0.01mm, which was nearly equal with the samples A to C.

Although embodiments the present invention have been described and illustrated in detail, it is clearly understood that the same is by way of illustration and example only and is not to be taken by way of limitation, the scope of the present invention being limited only by the terms of the appended claims.

## Claims

1. A throw-away tipped drill comprising an insert (31) for cutting a workpiece and a shank (32) to be mounted on a prescribed position of a cutting machine, said insert (31) being disengageably mechanically connected with said shank (32), said shank (32) being made of steel, **wherein** at least a cutting edge of said insert (31) is formed of a diamond sintered body, the amount of diamond contained in said diamond sintered body is in a range of at least 70 volume percent and not more than 99 volume percent, said diamond sintered body forming at least said cutting edge of said insert (31) contains WC and/or TiC and Co in addition to diamond, and wherein said shank (32) has left and right holding portions (33a, 33b) to be engaged with a held portion (31a) of said insert (31) for holding the same, each holding portion having an inner end surface, one or both of said holding portions being provided with a slit (34) separating the inner end surface so that the opposite inner end surfaces are relatively moved and elastically deformed upon engagement between the holding portions and the held portion, so that said insert (31) is fixed to said shank (32) by elastic force following elastic deformation of said holding portions (33a, 33b) caused upon engagement with said insert (31).

2. A throw-away tipped drill according to claim 1, **wherein** said insert (31) is formed by a base (42) of cemented carbide or steel and an insert tip (43) fixed to the base and comprising a cutting edge of said base (42), at least the cutting edge of said insert tip (43) being formed of a diamond sintered body.

3. A throw-away tipped drill in accordance with claim 2, **wherein** said insert tip (43) is fixed to said base (42) through a base tip (44) by brazing.

4. A throw-away tipped drill in accordance with claim 1 or 2, **wherein** the overall surface of the insert (31) is covered with a diamond film.

5. A throw-away tipped drill comprising an insert (31) for cutting a workpiece and a shank (32) to be mounted on a prescribed position of a cutting machine, said insert (31) being disengageably mechanically connected with said shank (32), said shank (32) being made of steel, **wherein** at least a cutting edge of said insert (31) is formed of a cubic boron nitride sintered body, the amount of cubic boron nitride contained in said cubic boron nitride sintered body forming said insert is in a range of at least 40 volume percent and not more than 80 volume percent, said cubic boron nitride sintered body forming at least said cutting edge of said insert (31) contains at least one of TiC, TiN and WC, and wherein said shank (32) has left and right holding portions (33a, 33b) to be engaged with a held portion (31a) of said insert (31) for holding the same, each holding portion having an inner end surface, one or both of said holding portions being provided with a slit (34) separating the inner end surfaces so that the opposite inner end surfaces are relatively moved and elastically deformed upon engagement between the holding portions and the held portion, so that said insert (31) is fixed to said shank (32) by elastic force following elastic deformation of said holding portions (33a, 33b) caused upon engagement with said insert (31).

6. A throw-away tipped drill according to claim 5, **wherein** said insert (31) is formed by a base (42) of cemented carbide or steel and an insert tip (43) fixed to the base and comprising a cutting edge of said base (42), at least the cutting edge of said insert tip (43) being formed of a cubic boron nitride sintered body.

7. A throw-away tipped drill in accordance with claim 6, **wherein** said insert tip (43) is fixed to said base (42) through a base tip (44) by brazing.

## Patentansprüche

1. Bohrer mit Wegwerfspitze mit einem Einsatz (31) zum Schneiden eines Werkstücks und einem Schaft (32), um in einer vorgeschriebene Stellung an einer Schneidemaschine angebracht zu werden, wobei der Einsatz (31) mit dem Schaft (32) lösbar mechanisch verbunden ist, wobei der Schaft (32) aus Stahl hergestellt ist, wobei mindestens eine Schneidkante des Einsatzes (31) aus einem gesinterten Diamantkörper gebildet ist, die Menge des in dem gesinterten Diamantkörper enthaltenen Diamants in einem Bereich von mindestens 70 Vol.-% und nicht mehr als 99 Vol.-% liegt, wobei der gesinterte Diamantkörper, der mindestens die Schneidkante des Einsatzes (31) bildet, WC und/oder TiC und Co zusätzlich zu dem Diamant enthält, und wobei der Schaft (32) mit linken und rechten Haltebereichen (33a, 33b) ausgestattet ist, um mit einem gehaltenen Bereich (31a) des Einsatzes (31) für dessen Halten im Eingriff zu stehen, wobei jeder Haltebereich eine innere Endfläche aufweist, wobei einer oder beide Haltebereiche mit einem Schlitz (34) versehen ist bzw. sind, der die inneren Endflächen trennt, so daß die gegenüberliegenden inneren Endflächen bei Eingriff zwischen den Haltebereichen und dem gehaltenen Bereich relativ bewegt und elastisch deformiert werden, so daß der Einsatz (31) an dem Schaft (32) durch elastische Kraft, die auf die elastische Deformierung der Haltebereiche (33a, 33b) folgt, die durch den Eingriff bewirkt wird, befestigt ist.

2. Bohrer mit Wegwerfspitze nach Anspruch 1, **dadurch gekennzeichnet, daß** der Einsatz (31) durch eine Basis (42) aus Hartmetall oder Stahl und eine Einsatzspitze (43) gebildet ist, die an der Basis befestigt ist und eine Schneidkante der Basis (42) umfaßt, wobei mindestens die Schneidkante der Einsatzspitze (43) aus einem gesinterten Diamantkörper besteht.

3. Bohrer mit Wegwerfspitze nach Anspruch 2, **dadurch gekennzeichnet, daß** die Einsatzspitze (43) an der Basis (42) über eine Basisspitze (44) mittels Hartlöten befestigt ist.

4. Bohrer mit Wegwerfspitze nach Anspruch 1 oder 2, **dadurch gekennzeichnet, daß** die Gesamtfläche des Einsatzes (31) mit einer Diamantfilm bedeckt ist.

5. Bohrer mit Wegwerfspitze mit einem Einsatz (31) zum Schneiden eines Werkstücks und einem Schaft (32), um in einer vorgeschriebene Stellung an einer Schneidemaschine angebracht zu werden, wobei der Einsatz (31) mit dem Schaft (32) lösbar mechanisch verbunden ist, wobei der Schaft (32) aus Stahl hergestellt ist, wobei mindestens eine Schneidkante des Einsatzes (31) aus einem kubischen Bornitridsinterkörper gebildet ist, die Menge des in dem kubischen Bornitridsinterkörper enthaltenen, kubischen Bornitrids in einem Bereich von mindestens 40 Vol.-% und nicht mehr als 80 Vol.-% liegt, wobei der kubische Bornitridsinterkörper, der mindestens die Schneidkante des Einsatzes (31) bildet, mindestens eines von TiC, TiN und WC enthält, und wobei der Schaft (32) mit linken und rechten Haltebereichen (33a, 33b) ausgestattet ist, um mit einem gehaltenen Bereich (31a) des Einsatzes (31) für dessen Halten im Eingriff zu stehen, wobei jeder Haltebereich eine innere Endfläche aufweist, wobei einer oder beide Haltebereiche mit einem Schlitz (34) versehen ist bzw. sind, der die inneren Endflächen trennt, so daß die gegenüberliegenden inneren Endflächen bei Eingriff zwischen den Haltebereichen und dem gehaltenen Bereich relativ bewegt und elastisch deformiert werden, so daß der Einsatz (31) an dem Schaft (32) durch elastische Kraft, die auf die elastische Deformierung der Haltebereiche (33a, 33b) folgt, die durch den Eingriff bewirkt wird, befestigt ist.

6. Bohrer mit Wegwerfspitze nach Anspruch 5, **dadurch gekennzeichnet, daß** der Einsatz (31) durch eine Basis (42) aus Hartmetall oder Stahl und eine Einsatzspitze (43) gebildet ist, die an der Basis befestigt ist und eine Schneidkante der Basis (42) umfaßt, wobei mindestens eine Schneidkante der Einsatzspitze (43) aus einem kubischen Bornitridsinterkörper besteht.

7. Bohrer mit Wegwerfspitze nach Anspruch 6, **dadurch gekennzeichnet, daß** die Einsatzspitze (43) an der Basis (42) über eine Basisspitze (44) mittels Hartlöten befestigt ist.

## Revendications

1. Foret à embout jetable comprenant un insert (31) pour découper une pièce à usiner et une tige (32) à monter sur une position prescrite de la machine de coupe, cet insert (31) étant raccordé de façon mécaniquement désengageable avec la tige (32), cette tige (32) étant en acier, dans lequel au moins un bord de coupe de l'insert (31) est réalisé en un corps fritté au diamant, la quantité de diamant contenue dans le corps fritté au diamant se situe dans une plage d'au moins 70 % en volume et ne dépasse pas 99 % en volume, ce corps fritté au diamant formant au moins le bord de coupe de l'insert (31) et contient du WC et/ou TiC et Co en plus du diamant, et dans lequel la tige (32) présente des portions de préhension gauche et droite (33a, 33b) à engager avec la portion maintenue (31a) de l'insert (31) pour maintenir celui-ci, chaque portion de préhension ayant une surface d'extrémité interne, une ou deux des portions de maintien étant dotées d'une fente (34) séparant la surface d'extrémité interne de sorte que les surfaces d'extrémité internes opposées sont déplacées sélectivement et sont déformées élastiquement lors de l'engagement entre les portions de préhension et la portion maintenue de sorte que l'insert (31) est fixé sur la tige (32) par une force élastique suivant la déformation élastique des portions de retenue (33a, 33b), provoquée lors de l'engagement de l'insert (31).

2. Foret à embout jetable selon la revendication 1, dans lequel l'insert (31) est constitué d'une base (42) en carbure cémenté ou en acier et d'une pointe d'insert (43) fixée sur la base et comprenant un bord de coupe de la base (42), au moins le bord de coupe de la pointe d'insert (43) étant réalisé en un corps fritté au diamant.

3. Foret à embout jetable selon la revendication 2, dans lequel la pointe d'insert (43) est fixée sur la base (42) par une pointe de base (44) par brasage.

4. Foret à embout jetable selon la revendication 1 ou 2, dans lequel la surface globale de l'insert (31) est revêtue d'une pellicule au diamant.

5. Foret à embout jetable comprenant un insert (31) pour couper une pièce à usiner et une tige (32) à monter sur une position prescrite de la machine de coupe, cet insert (31) étant raccordé de façon mécaniquement désengageable avec la tige (32), cette tige (32) étant réalisée en acier, dans lequel au moins un bord tranchant de l'insert (31) est formé à partir d'un corps fritté au nitrure de bore cubique, la quantité de nitrure de bore cubique contenue dans le corps fritté de nitrure de bore cubique formant cet insert se situe dans une plage d'au moins 40 % en volume et ne dépassera pas 80 % en volume, ce corps fritté au nitrure de bore cubique formant au moins le bord tranchant de l'insert (31) et contient au moins l'un de TiC, TiN et WC, et dans lequel la tige (32) présente des portions de préhension gauche et droite (33a, 33b) destinées à coopérer avec une portion retenue (31a) de l'insert (31) pour retenir celui-ci, chaque portion de retenue ayant une surface d'extrémité interne, une ou les deux des portions de retenue étant dotées d'une fente (34) séparant les surfaces d'extrémité internes de sorte que les surfaces d'extrémité internes opposées sont déplacées relativement et déformées élastiquement lors de l'engagement entre les portions de préhension et la portion retenue de sorte que l'insert (31) est fixé sur la tige (32) par force élastique suivant la déformation élastique des portions de retenue (33a, 33b), provoquée lors de l'engagement avec l'insert (31).

6. Foret à embout jetable selon la revendication 5, dans lequel l'insert (31) est formé par une base (42) en carbure cémenté ou en acier et une pointe d'insert (43) fixée sur la base et comprenant un bord tranchant de la base (42), au moins le bord de coupe de la pointe d'insert (43) étant formé d'un corps fritté au nitrure de bore cubique.

7. Foret à embout jetable selon la revendication 6, dans lequel la pointe d'insert (43) est fixée sur la base (42) par une pointe de base (44) par brasage.
